# EUROPÄISCHE PATENTSCHRIFT

(11) **EP 1 832 794 B1**
(45) Veröffentlichungstag und Bekanntmachung des Hinweises auf die Patenterteilung: **08.04.2009**
(21) Anmeldenummer: 06005015.0
(22) Anmeldetag: 11.03.2006
(51) Int. Cl.: F16L 19/02, F16L 37/107

(54) **Rohrkupplung**
Pipe coupling
Raccord de tuyaux

(43) Veröffentlichungstag der Anmeldung: 12.09.2007
(73) Patentinhaber: Karl Hamacher GmbH, 44866 Bochum (DE)
(72) Erfinder: Füsser, Bernd, Dr., 45219 Essen (DE)
(74) Vertreter: Nunnenkamp, Jörg

(56) Entgegenhaltungen:
- DE-A1- 4 227 319
- DE-B- 1 061 142
- DE-C- 122 735
- DE-C- 689 468
- DE-C- 834 928
- DE-U- 29 511 730
- FR-A- 2 630 187
- GB-A- 387 628
- US-A- 1 071 235
- US-A- 4 802 695

## Beschreibung

Die Erfindung betrifft eine Rohrkupplung zur Verbindung von wenigstens zwei Rohren, mit jeweils an zu kuppelnden Rohrenden befestigten Kupplungskränzen, und mit zumindest einer die Kupplungskränze übergreifenden Kupplungsschale, welche an den einen Kupplungskranz axial verschiebbar angeschlossen ist und den anderen Kupplungskranz übergreift, wobei die beiden Kupplungskränze an ihren einander zugewandten Stirnseiten mit ineinander greifenden und im Querschnitt einerseits konvex und andererseits konkav gekrümmten Kupplungsflächen zur gegenseitigen Ausrichtung und Zentrierung ausgerüstet sind.

Eine Rohrkupplung der eingangs beschriebenen Ausführungsform wird in der DE 834 928 C vorgestellt. Hier geht es im Kern um eine gummilose Verschraubung, also eine solche, die auf die Anwendung geeigneten Dichtungsmaterials aus z. B. Gummi ausdrücklich verzichtet. Zu diesem Zweck sind ein Gewinde, ein Kegelstutzen und eine Überwurfmutter vorgesehen. Am Gewindeteil sind ein Bordring und ein Ansatz so angebracht, dass die Verbindungslinie zwischen dem größten Durchmesser des Bordringes und der äußersten Kante des Ansatzes das Gewinde nicht berührt.

Auch die ebenfalls gattungsgemäße DE 1 061 142 B verzichtet im Kern auf eine zusätzliche Dichtung bzw. Gummidichtung. Denn hier geht es um eine Hartdichtung, bei der die benachbarten, jeweils aus einem zusammenhängenden Stück bestehenden Rohrenden mit ihren Dichtflächen ohne Beifügung einer Dichtung aneinandergepresst werden. Die Abdichtung wird mit Hilfe ringsum verlaufender, einander gegenüberliegender Nut und Feder bewirkt.

Ferner kennt der Stand der Technik durch die DE 42 27 319 A1 eine Rohrverschraubung mit einem Gewindestutzen, einem Gegenstutzen sowie einem in einer Ringnut gelagerten verformbaren Dichtring. Der Gewindestutzen und der Gegenstutzen greifen radial spielfrei ineinander ein. Außerdem ist ein die Verformung eines Dichtringbundes in axialer Richtung begrenzender Anschlag vorgesehen. Hierdurch lassen sich Dichtungsprobleme jedoch nicht gänzlich beherrschen. Das gilt erst recht, wenn man berücksichtigt, dass die beiden einleitend behandelten Dokumente DE 834 928 C und DE 1 061 142 B auch zu Dichtigkeitsproblemen führen können.

Darüber hinaus kennt man eine Rohrkupplung, wie sie beispielhaft in dem Gebrauchsmuster DE 295 11 730 U1 beschrieben wird. Hier ist die Kupplungsschale zweiteilig mit zwei Kupplungshalbschalen ausgeführt, welche über ein Scharnier schwenkbar miteinander verbunden sind. Auf der dem Scharnier gegenüberliegenden Seite sorgt eine Verriegelungseinrichtung dafür, dass die Kupplungsschale auf den übergriffenen Kupplungskränzen fixierbar ist. Die bekannte Rohrkupplung hat sich bewährt, ist jedoch was die Handhabung und Anbringung der Kupplungsschale angeht, verbesserungsfähig.

Vergleichbares gilt für die Rohrkupplung nach dem Gebrauchsmuster DE 297 04 105 U1. Tatsächlich sind hier wiederum zwei Kupplungshalbschalen realisiert, die an ihren Schalenenden Verschlussansätze aufweisen und mittels eines die Verschlussansätze durchdringenden Schließbolzens in Verschlussstellung überführt und gehalten werden. Auch in diesem Fall ist ein zusätzlicher Schließbolzen erforderlich und müssen im Übrigen die beiden Kupplungshalbschalen für ihre Verriegelung bei der Verbindung der Rohrenden gegeneinander und gegenüber der Verriegelungseinrichtung ausgerichtet werden. Das ist aufwendig und manchmal beschwerlich, insbesondere dann, wenn der Verbindungsbereich der Rohrenden - beispielsweise im untertägigen Betrieb - kaum oder nur schwer zugänglich ist.

Unabhängig davon kennt man durch die Gebrauchsmusterschrift DE 201 19 672 U1 ein Rohrverbindungssystem, welches zusätzlich zu den Kupplungskränzen bzw. Rohrmuffen und einer Rohrkupplungsschelle noch mit einem Verbindungsnippel ausgerüstet ist, welcher in die Rohrmuffen eingebracht wird. An dieser Ausführungsform ist nachteilig, dass der Verbindungsnippel zusätzlich für eine Rohrverbindung benötigt wird und beispielsweise verloren gehen kann oder doch zumindest zusätzlich zu den zu verbindenden Rohren bevorratet werden muss. Hier will die Erfindung insgesamt Abhilfe schaffen.

Der Erfindung liegt das technische Problem zugrunde, eine derartige Rohrkupplung so weiter zu entwickeln, dass die Kupplungsschale funktionsgerecht auf die Kupplungskränze aufgebracht werden kann und die Rohrenden zuverlässig und dichtend sowie einfach miteinander verbindet, und zwar unter Berücksichtigung einer mit möglichst wenigen Teilen realisierten Ausgestaltung.

Zur Lösung dieser technischen Problemstellung ist eine gattungsgemäße Rohrkupplung im Rahmen der Erfindung dadurch gekennzeichnet, dass die beiden Kupplungskränze eine umlaufende Ringnut für eine Ringdichtung einschließen, welche in dem einen, mit der Kupplungsschale verbundenen, Kupplungskranz und im Querschnitt asymmetrisch mit ebenem Fuß und gekrümmtem Kopf ausgebildet ist, wobei der abgerundete Kopf der Ringdichtung an der einen Stirnseite des anderen Kupplungskranzes anliegt und einen sich von der Ringnut hin zum Rohrinneren öffnenden Spalt abdichtet, und wobei der Spalt an der Ringnut endet, weil weiter rohraußenseitig die beiden aneinander anliegenden Kupplungsflächen für eine spaltfreie Verbindung der Kupplungskränze sorgen.

Durch den axial verschiebbaren Anschluss der Kupplungsschale an den einen Kupplungskranz wird zunächst einmal erreicht, dass die betreffende Kupplungsschale und der Kupplungskranz gleichsam eine Baueinheit bilden können, folglich die Kupplungsschale (unverlierbar) an dem einen Kupplungskranz festgelegt ist oder festgelegt werden kann, wobei selbstverständlich auch eine Anbringung der Kupplungsschale an dem anderen Kupplungskranz denkbar ist.

Die zusätzliche axiale Verschiebbarkeit der Kupplungsschale gegenüber dem einen Kupplungskranz gewährleistet darüber hinaus, dass die Verbindung der beiden Rohre aufwandsarm und mit möglichst wenigen Bauteilen gelingt. Tatsächlich stellt die axiale Verschiebbarkeit sicher, dass die Rohrenden problemlos - beispielsweise in einer eingebauten Leitung - voneinander gelöst und miteinander verbunden werden können.

Dazu ist es lediglich erforderlich, die an dem einen Kupplungskranz axial verschiebbare Kupplungsschale entsprechend zu lösen oder festzuziehen. Im erstgenannten Fall entfernt sich die Kupplungsschale von dem übergriffenen anderen Kupplungskranz, so dass dieser von der Kupplungsschale entfernt werden kann. Der zweitgenannte Fall korrespondiert dazu, dass der von der Kupplungsschale freie andere Kupplungskranz an den mit der Kupplungsschale verbundenen Kupplungskranz angedrückt und so die Verbindung hergestellt wird.

Im Detail ist hierzu die Kupplungsschale rotativ und axial verschiebbar an den besagten einen Kupplungskranz angeschlossen. Tatsächlich greift die Erfindung an dieser Stelle üblicherweise auf eine Schraubverbindung, eine Bajonettverbindung oder dergleichen zurück, mit deren Hilfe die (eine einzige) Kupplungsschale mit dem einen Kupplungskranz verbunden ist. In diesem Zusammenhang hat es sich bewährt, wenn die Kupplungsschale als einteiliger Muffenring mit beispielsweise Innengewinde und Anschlagring ausgeführt ist, welcher den (freien) anderen Kupplungskranz übergreift. Im Rahmen einer solchen Ausgestaltung verfügt der mit der Kupplungsschale verbundene eine Kupplungskranz über ein korrespondierendes und mit dem Innengewinde zusammenwirkendes Außengewinde. Selbstverständlich kann an dieser Stelle auch mit einer schraubenwendelförmigen Nut außenseitig des einen Kupplungskranzes gearbeitet werden, in den innenseitig am Muffenring vorgesehenen Zapfen unter Realisierung einer Bajonettverbindung zwischen dem besagten Kupplungskranz und der Kupplungsschale eingreifen.

Die Kupplungsschale ist regelmäßig mit wenigstens einem angeschlossenen Manipulationsmittel ausgerüstet, um ihre axiale und gegebenenfalls rotative Bewegung zu bewirken. Tatsächlich wird die Kupplungsschale üblicherweise rotativ beaufschlagt und vollführt hierbei eine Schraubbewegung, so dass sie gleichzeitig axial im Vergleich zu dem mit ihr verbundenen einen Kupplungskranz verschoben wird. Sofern bei diesem Vorgang der Anschlagring den anderen Kupplungskranz übergreift, wird hierdurch entweder der Abstand zwischen den beiden Kupplungskränzen vergrößert oder die beiden Kupplungskränze werden gegeneinander verspannt.

Damit der Vorgang des Verspannens problemlos und verkantungsfrei vonstatten geht, verfügen die beiden Kupplungskränze an ihren einander zugewandten Stirnseiten über ineinander greifende Kupplungsflächen. Diese sorgen für eine gegenseitige Ausrichtung und Zentrierung der beiden Kupplungskränze, und zwar insbesondere dann, wenn die beiden Kupplungskränze mit Hilfe der Kupplungsschale gegeneinander verspannt werden. Bei den beiden Kupplungsflächen handelt es sich um solche, die über eine im Querschnitt einerseits konkave und andererseits konvexe Gestalt verfügen bzw. entsprechend gekrümmt sind.

Dabei hat sich bewährt, wenn der mit der Kupplungsschale gekoppelte eine Kupplungskranz über konvexe und in Richtung auf eine Rohrmittellinie einwärts gekrümmte Kupplungsflächen verfügt, wohingegen der andere Kupplungskranz mit konkaven und nach außen gekrümmten komplementären Kupplungsflächen ausgerüstet ist. In diesem Zusammenhang versteht es sich, dass die jeweiligen Krümmungsradien einander entsprechen und im Übrigen die Kupplungsflächen durch die jeweils rotationssymmetrische Ausgestaltung der Kupplungskränze im Vergleich zur Rohrmittellinie als konvexe respektive konkave Kupplungsringe ausgeführt sind.

Die beiden Kupplungskränze schließen die umlaufende Ringnut für die Ringdichtung ein, und zwar bevorzugt dann, wenn sie sich in dichtender Anlage aneinander befinden bzw. ihre die Rohre koppelnde Einbaustellung annehmen. Die Ringdichtung wird in dem umlaufenden und ringförmigen Ringkanal bzw. der entsprechenden Ringnut mit in etwa rechteckförmigem Querschnitt aufgenommen. Aus diesem Grund ist die Ringdichtung im Querschnitt asymmetrisch ausgeführt und verfügt über den ebenen Fuß und die kopfseitig abgerundete Anlagefläche bzw. den gekrümmten Kopf.

Der im Querschnitt rechteckförmige Ringkanal ist in dem einen mit der Kupplungsschale verbundenen Kupplungskranz ausgebildet. Dabei wird die Auslegung von einerseits Ringkanal und andererseits Ringdichtung so gewählt, dass die Ringdichtung mit ihrer kopfseitigen und abgerundeten Anlagefläche den Ringkanal bzw. die Ringnut überragt und gegen die der Ringdichtung zugewandte Stirnseite des anderen und freien Kupplungskranzes anliegt. Auf diese Weise wird der sich im Anschluss an den Ringkanal zum Rohrinnern hin öffnende Spalt zuverlässig und dichtend verschlossen.

Dadurch, dass die beiden Kupplungskränze jeweils stumpf an die Rohrenden angeschlossen und in Verlängerung der Rohrenden angeordnet sind, lassen sich die Rohre jeweils für ihre anschließende Kopplung problemlos beispielsweise gleich ausgestalten. Dabei ist die mit dem einen oder mit dem anderen Kupplungskranz verbundene Kupplungsschale zudem unverlierbar mit dem einen oder mit dem anderen Rohr verbunden bzw. lässt sich hieran beispielsweise für den Transport der Rohre festlegen.

Die Verbindung der beiden Rohre erfolgt nun dergestalt, dass die Kupplungsschale über das andere Rohr mit dem anderen Kupplungskranz geschoben wird, und zwar soweit, bis der Anschlagring der Kupplungsschale gegen eine ebenfalls ringförmige Anschlagkante des anderen Kupplungskranzes anschlägt. Nun ist es nur noch erforderlich, die Kupplungsschale bzw. den Muffenring mit ihrem bzw. seinem Innengewinde auf das Außengewinde der einen Kupplungsschale aufzuschrauben. Bei diesem Vorgang werden die beiden Kupplungskränze infolge der ineinander greifenden Kupplungsflächen gegenseitig ausgerichtet und zentriert. Gleichzeitig sorgt die in die umlaufende Ringnut eingelegte Ringdichtung für gegenseitige Abdichtung. Da die Kupplungsschale bzw. der Muffenring mit ihrem bzw. seinen Anschlagring die Anschlagkante des anderen Kupplungskranzes übergreift korrespondiert eine Schraubbewegung der Kupplungsschale bzw. des Muffenringes dazu, dass die beiden Kupplungskränze zunehmend gegeneinander verspannt werden.

Um die für diesen Vorgang notwendige Schraubbewegung auf die Kupplungsschale zu übertragen, mag diese mit radial abstehenden Zapfen als Manipulationsmittel ausgerüstet werden, die beispielsweise schlagend mit einem Hammer bearbeitet werden. Genauso gut ist es aber auch möglich, dass die Kupplungsschale außenseitig mit einer oder mehreren Ansatzflächen für einen Maulschlüssel oder dergleichen ausgerüstet ist. Schließlich ist der mit der Kupplungsschale verbundene eine Kupplungskranz vorteilhaft so ausgelegt, dass er den von der Kupplungsschale übergriffenen anderen Kupplungskranz radial überragt, um die gewünschte Zentrierung und Ausrichtung des demgegenüber (freien) anderen Kupplungskranzes zu bewirken.

Im Ergebnis wird eine Rohrkupplung zur Verfügung gestellt, die sich zur Verbindung von wenigstens zwei Rohren besonders eignet. Bei diesen Rohren kann es sich um Steigrohre, Hochdruckrohre oder allgemeine Rohre aus insbesondere Metall, vorzugsweise Stahl handeln. Grundsätzlich können die Rohre aber auch aus Kunststoff gefertigt sein. Gleiches gilt für die Rohrkränze und die Kupplungsschale, die ebenfalls aus Metall bzw. Stahl oder Kunststoff gefertigt sein können.

Immer kommt die beschriebene Rohrkupplung mit ganz wenigen Bauteilen aus und ermöglicht eine funktionsgerechte Rohrverbindung. Diese wird im Kern dadurch bewerkstelligt, dass die Kupplungsschale für die Verspannung der beiden Kupplungskränze sorgt, die an ihren einander zugewandten Stirnseiten mit ineinander greifenden Kupplungsflächen zur gegenseitigen Ausrichtung und Zentrierung ausgerüstet sind. Die zusätzlich vorgesehene Dichtung sorgt dafür, dass selbst bei Drücken bis zu 600 bar und mehr Undichtigkeiten nicht beobachtet werden. Hierin sind die wesentlichen Vorteile zu sehen.

Die nachfolgende Zeichnung zeigt eine erfindungsgemäße Rohrkupplung zusammen mit zwei Rohren im Axialschnitt.

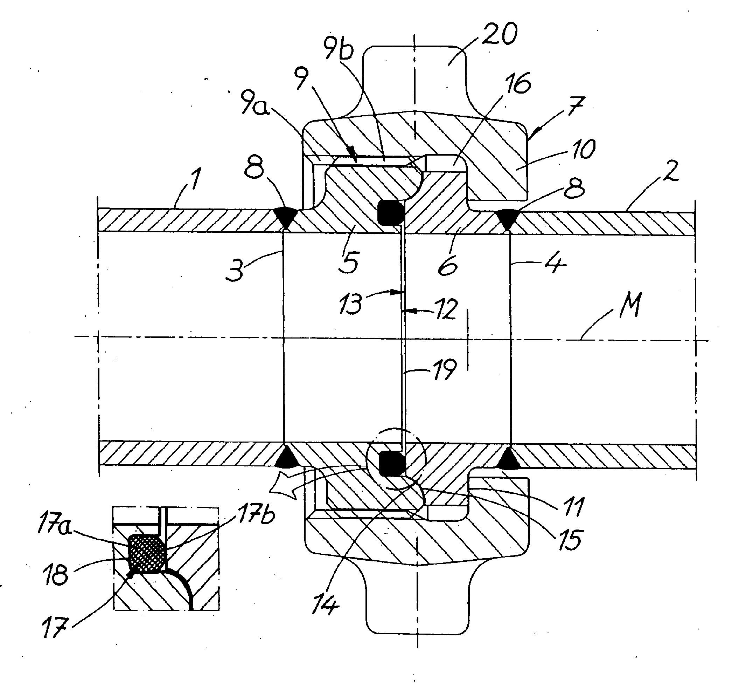

In der einzigen Figur ist eine Rohrkupplung dargestellt, die zur Verbindung von wenigstens zwei Rohren 1, 2 dient. Zu diesem Zweck verfügt die Rohrkupplung über an jeweils zu kuppelnden Rohrenden 3, 4 befestigte Kupplungskränze 5, 6. Außerdem ist wenigstens eine die Kupplungskränze 5, 6 übergreifende Kupplungsschale 7 realisiert.

Erfindungsgemäß ist die Kupplungsschale 7 an den einen Kupplungskranz 5 axial verschiebbar angeschlossen und übergreift den anderen Kupplungskranz 6. Man erkennt, dass der eine Kupplungskranz 5 an das Rohrende 3 des einen Rohres 1 stumpf angeschlossen ist, während der andere Kupplungskranz 6 an das Rohrende 4 des anderen Rohres 2 ebenfalls stumpf angeschlossen ist. Tatsächlich sind hierzu jeweils umlaufende Schweißverbindungen 8 im Rahmen des Ausführungsbeispiels vorgesehen, weil sowohl die beiden Rohre 1, 2 als auch die zugehörigen Kupplungskränze 5, 6 jeweils metallisch, insbesondere aus Stahl, ausgeführt und jeweils rotationssymmetrisch im Vergleich zu einer Rohrmittellinie M als Rotationssymmetrieachse ausgebildet sind, was jedoch nicht zwingend ist.

Tatsächlich sind die beiden Kupplungskränze 5, 6 jeweils in Verlängerung der jeweiligen Rohre 1, 2 an diese angeschlossen, so dass eine zugehörige Rohrinnenwandung - auch im Bereich der Rohrkupplung - überwiegend absatzfrei und glatt ausgestaltet ist. Die Kupplungsschale 7 ist im Ausführungsbeispiel ebenfalls rotationssymmetrisch im Vergleich zur Rohrmittellinie M ausgebildet und stellt vorliegend einen Muffenring dar. Die Kupplungsschale 7 bzw. der Muffenring ist rotativ und axial verschiebbar an den einen Kupplungskranz 5 angeschlossen, und zwar über eine Schraubverbindung 9. Tatsächlich könnte an dieser Stelle auch eine Bajonettverbindung realisiert werden.

Die Schraubverbindung 9 setzt sich im Detail aus einem Innengewinde 9a innenseitig des Muffenringes bzw. der Kupplungsschale 7 und einem Außengewinde 9b außenseitig auf dem einen Kupplungskranz 5 zusammen. Zusätzlich ist die Kupplungsschale bzw. der Muffenring 7 mit einem Anschlagring 10 ausgerüstet, welcher mit einer ringförmigen Anschlagkante 11 an dem anderen Kupplungskranz 6 zusammenwirkt bzw. diesen übergreift.

Je nach rotativer Beaufschlagung der Kupplungsschale 7 werden die beiden Kupplungskränze 5, 6 miteinander verspannt oder voneinander gelöst. Damit das Verspannen der Kupplungskränze 5, 6 verkantungsfrei und ausgerichtet sowie gegenseitig zentriert vollzogen werden kann, verfügen die beiden Kupplungskränze 5, 6 an ihren einander zugewandten Stirnseiten 12, 13 über ineinander greifende Kupplungsflächen 14, 15.

Tatsächlich formen die beiden Kupplungsflächen 14, 15 wegen der rotationssymmetrischen Ausgestaltung der Kupplungskränze 5, 6 jeweils Kupplungsringe 14, 15, die im Querschnitt einerseits konvex und andererseits konkav gekrümmt sind. Im Detail besitzt die Kupplungsfläche 14 an dem einen Kupplungskranz 5 eine konvexe Krümmung, wohingegen die Kupplungsfläche 15 an dem anderen Kupplungskranz 6 mit einer komplementären konkaven Krümmung mit in etwa gleichem Radius ausgerüstet ist. Des Weiteren erkennt man, dass der mit der Kupplungsschale 7 verbundene eine Kupplungskranz 5 den von der Kupplungsschale 7 bzw. dessen Anschlagring 10 übergriffenen anderen Kupplungskranz 6 radial überragt. Dadurch wird ein Ringspalt 16 zwischen dem anderen Kupplungskranz 6 und der Kupplungsschale 7 gebildet, welcher die Zentrierung und Ausrichtung des anderen Kupplungskranzes 6 gegenüber dem einen Kupplungskranz 5 gewährleistet, ohne dass der andere Kupplungskranz 6 beispielsweise innenseitig an der Kupplungsschale 7 schabt.

Die konvexe Kupplungsfläche 14 ist nach innen in Richtung auf die Rohrmittellinie M gekrümmt, wohingegen die konkave Kupplungsfläche 15 mit einer demgegenüber nach außen weisenden Krümmung ausgerüstet ist. Dadurch wird der andere Kupplungskranz 6 in dem einen und mit der Kupplungsschale 7 verbundenen Kupplungskranz 5 gleichsam ähnlich wie in einem Trichter aufgenommen und kann sich durch das Zusammenspiel der beiden Kupplungsflächen bzw. Kupplungsringe 14, 15 und infolge des umlaufenden Ringspaltes 16 problemlos ausrichten und zentrieren. Dieser Vorgang stellt zudem sicher, dass eine Ringdichtung 17, welche in einer umlaufenden Ringnut 18 aufgenommen wird, nicht gequetscht oder beschädigt wird.

Tatsächlich schließen die beiden Kupplungskränze 5, 6 die besagte umlaufende Ringnut 18 für die Ringdichtung 17 ein. Im Detail ist die umlaufende Ringnut 18 in dem einen, mit der Kupplungsschale 7 verbundenen, Kupplungskranz 5 ausgebildet und verfügt über eine im Querschnitt rechteckförmige Gestalt. Die Ringdichtung 17 ist im Querschnitt asymmetrisch ausgebildet und verfügt über einen ebenen Fuß 17a und einen abgerundeten Kopf 17b bzw. eine kopfseitig vorgesehene abgerundete Anlagefläche. Der abgerundete Kopf 17b der Ringdichtung 17 liegt an der Stirnseite 13 des anderen Kupplungskranzes 6 an und dichtet einen sich vom Ringkanal bzw. der Ringnut 18 zur Aufnahme der Ringdichtung 17 hin zum Rohrinnern öffnenden Spalt 19 ab.

Dieser Spalt 19 endet folglich an der Ringdichtung 17, weil weiter rohraußenseitig die beiden aneinander anliegenden Kupplungsflächen 14, 15 für eine entsprechende spaltfreie Verbindung der Kupplungskränze 5, 6 sorgen.

Um die beiden Kupplungskränze 5, 6 und folglich die beiden Rohre 1, 2 zu verspannen und voneinander zu lösen, verfügt die Kupplungsschale 7 über ein angeschlossenes Manipulationsmittel 20.

Im Rahmen des Ausführungsbeispiels und nicht einschränkend handelt es sich bei dem Manipulationsmittel 20 um mehrere an die Kupplungsschale 7 angeschlossene Stege, die beispielsweise schlagend beaufschlagt werden können, um die beiden Kupplungskränze 5, 6 und folglich die Rohre 1, 2 miteinander zu verspannen oder voneinander zu lösen. Selbstverständlich sind an dieser Stelle auch völlig andere Betätigungsmethoden denkbar und werden von der Erfindung umfasst.

Für die Montage der beiden Rohre 1, 2 ist es lediglich erforderlich, die Kupplungsschale 7 über das andere Rohr 2 zu schieben, bis der Anschlagring 10 der Kupplungsschale 7 gegen die Anschlagkante 11 des anderen Kupplungskranzes 6 anläuft. Nun muss nur noch das eine Rohr 1 mit dem einen Kupplungskranz 5 mit der Kupplungsschale 7 verbunden werden, indem die Schraubverbindung 9 hergestellt wird. Sobald sich die beiden Kupplungskränze 5, 6 einander annähern, sorgen die komplementären Kupplungsflächen 14, 15 dafür, dass eine gegenseitige Ausrichtung erfolgt und gleichzeitig die Ringdichtung 17 bestimmungsgemäß den Spalt 19 abdichtet. Dabei ist die Auslegung insgesamt so getroffen, dass selbst bei gegeneinander verspannten Kupplungskränzen 5, 6 der Spalt 19 verbleibt, so dass die Ringdichtung 17 nicht gequetscht wird.

Es versteht sich, dass die Ringdichtung 17 auch eine andere als die beschriebene Gestalt aufweisen kann, beispielsweise mit durchgängigem Kreisquerschnitt. Außerdem liegt es selbstverständlich im Rahmen der Erfindung, bei der Kupplungsschale 7 nicht nur alternativ mit einer Schraubverbindung 9 oder einer Bajonettverbindung zu arbeiten, sondern eine Schraubverbindung 9 mit einer Bajonettverbindung zu kombinieren. Das heißt, die Kupplungsschale 7 könnte mit dem zugehörigen Kupplungskranz 5 auch in der Weise verbunden werden, dass zunächst mehrere Ausnehmungen, beispielsweise vier, im Anfangsbereich ähnlich einer Bajonettverbindung realisiert sind und dann noch mehrere, beispielsweise zwei oder drei, ganze Gewindegänge der Schraubverbindung 9 folgen.

## Patentansprüche

1. Rohrkupplung zur Verbindung von wenigstens zwei Rohren (1, 2) mit jeweils an zu kuppelnden Rohrenden (3, 4) befestigten Kupplungskränzen (5, 6), und mit zumindest einer die Kupplungskränze (5, 6) übergreifenden Kupplungsschale (7), welche an den einen Kupplungskranz (5) axial verschiebbar angeschlossen ist und den anderen Kupplungskranz (6) übergreift, wobei
die beiden Kupplungskränze (5, 6) an ihren einander zugewandten Stirnseiten (12, 13) mit ineinander greifenden und im Querschnitt einerseits konvex und andererseits konkav gekrümmten Kupplungsflächen (14, 15) zur gegenseitigen Ausrichtung und Zentrierung ausgerüstet sind,
**dadurch gekennzeichnet, dass**
- die beiden Kupplungskränze (5, 6) eine umlaufende Ringnut (18) für eine Ringdichtung (17) einschließen, welche in dem einen, mit der Kupplungsschale (7) verbundenen, Kupplungskranz (5) und im Querschnitt asymmetrisch mit ebenem Fuß (17a) und gekrümmtem Kopf (17b) ausgebildet ist, wobei
- der abgerundete Kopf (17b) der Ringdichtung (17) an der einen Stirnseite (13) des anderen Kupplungskranzes (6) anliegt und einen sich von der Ringnut (18) hin zum Rohrinnern öffnenden Spalt (19) abdichtet, und wobei
- der Spalt (19) an der Ringdichtung (17) endet, weil weiter rohraußenseitig die beiden aneinander liegenden Kupplungsflächen (14, 15) für eine spaltfreie Verbindung der Kupplungskränze (5, 6) sorgen.

2. Rohrkupplung nach Anspruch 1, **dadurch gekennzeichnet, dass** die Kupplungsschale (7) rotativ und axial verschiebbar an den einen Kupplungskranz (5) angeschlossen ist.

3. Rohrkupplung nach Anspruch 1 oder 2, **dadurch gekennzeichnet, dass** die Kupplungsschale (7) über eine Schraubverbindung (9), Bajonettverbindung oder dergleichen mit dem einen Kupplungskranz (5) verbunden ist.

4. Rohrkupplung nach einem der Ansprüche 1 bis 3, **dadurch gekennzeichnet, dass** die Kupplungsschale (7) wenigstens ein angeschlossenes Manipulationsmittel (20) aufweist, um ihre axiale und gegebenenfalls rotative Bewegung zu bewirken.

5. Rohrkupplung nach einem der Ansprüche 1 bis 4, **dadurch gekennzeichnet, dass** die beiden Kupplungskränze (5, 6) jeweils stumpf an die Rohrenden (3, 4) angeschlossen sind.

6. Rohrkupplung nach einem der Ansprüche 1 bis 5, **dadurch gekennzeichnet, dass** der mit der Kupplungsschale (7) verbundene eine Kupplungskranz (5) den von der Kupplungsschale (7) übergriffenen anderen Kupplungskranz (6) radial überragt.

## Claims

1. A pipe coupling for the connection of at least two pipes (1, 2) having coupling rings (5, 6) fastened in each case to the pipe ends (3, 4) to be coupled and having at least one coupling shell (7) which overlaps the coupling rings (5, 6), which coupling shell is connected axially displaceably to the one coupling ring (5) and overlaps the other coupling ring (6), wherein
the two coupling rings (5, 6) intermesh at their mutually facing front sides (12, 13) and coupling faces (14, 15) having a convexly curved cross-section on one side and a concavely curved cross-section on the other side are equipped for mutual alignment and centring,
**characterised in that**
- the two coupling rings (5, 6) enclose a circumferential annular groove (18) for an annular seal (17), which is formed in the one coupling ring (5) connected to the coupling shell (7) and is asymmetrical in cross-section having a flat base (17a) and curved head (17b), wherein
- the rounded head (17b) of the annular seal (17) abuts against the one front side (13) of the other coupling ring (6) and seals a gap (19) opening from the annular groove (18) towards the inside of the pipe, and wherein
- the gap (19) ends at the annular seal (17) because the two abutting coupling faces (14, 15) provide for gap-free connection of the coupling rings (5, 6) further outside of the pipe.

2. The pipe coupling according to claim 1, **characterised in that** the coupling shell (7) is connected rotationally and axially displaceably to the one coupling ring (5).

3. The pipe coupling according to claim 1 or 2,
**characterised in that** the coupling shell (7) is connected to the one coupling ring (5) by means of a screw connection (9), bayonet connection or the like.

4. The pipe coupling according to any one of claims 1 to 3, **characterised in that** the coupling shell (7) has at least one connected manipulation means (20) to effect its axial and optionally rotational movement.

5. The pipe coupling according to any one of claims 1 to 4, **characterised in that** the two coupling rings (5, 6) are each connected to the pipe ends (3, 4) in a butt-jointed manner.

6. The pipe coupling according to any one of claims 1 to 5, **characterised in that** the one coupling ring (5) connected to the coupling shell (7) projects radially from the other coupling ring (6) which is overlapped by the coupling shell (7).

## Revendications

1. Accouplement de tuyaux pour relier au moins deux tuyaux (1,2) avec des couronnes d'accouplement (5,6) respectivement fixées aux extrémités de tuyaux (3,4) à coupler et avec au moins une coque d'accouplement (7) englobant les couronnes d'accouplement (5,6), qui est raccordée de manière déplaçable axialement à une des couronnes d'accouplement (5) et englobe l'autre couronne d'accouplement (6), dans lequel
les deux couronnes d'accouplement (5,6) sont équipées sur les côtés frontaux (12,13) tournés l'un vers l'autre de surfaces d'accouplement (14,15) s'engrenant l'une dans l'autre et à incurvation convexe d'un côté et incurvation concave d'un autre côté en coupe transversale à des fins d'alignement et de centrage mutuel,
**caractérisé en ce que**
- les deux couronnes d'accouplement (5,6) incluent une rainure annulaire (18) faisant le tour de leur circonférence destinée à un joint d'étanchéité annulaire (17), qui est réalisé dans une des couronnes d'accouplement (5), reliée à la coque d'accouplement (7) et est configuré en coupe transversale asymétriquement avec un pied plat (17a) et une tête incurvée (17b), dans lequel
- la tête arrondie (17b) du joint d'étanchéité annulaire (17) repose sur un des côtés frontaux (13) de l'autre couronne d'accouplement (6) et rend étanche un interstice (19) s'ouvrant de la rainure annulaire (18) jusqu'à l'intérieur du tuyau, et dans lequel
- l'interstice (19) se termine au joint d'étanchéité annulaire (17), parce que plus loin du côté extérieur du tuyau les deux surfaces d'accouplement (14,15) reposant l'une sur l'autre assurent une liaison exempte d'interstice des couronnes d'accouplement (5,6).

2. Accouplement de tuyaux selon la revendication 1,
**caractérisé en ce que** la coque d'accouplement (7) est raccordée de manière déplaçable rotativement et axialement à une des couronnes d'accouplement (5).

3. Accouplement de tuyaux selon la revendication 1 ou 2, **caractérisé en ce que** la coque d'accouplement (7) est reliée par l'intermédiaire d'une liaison par vissage (9), une liaison à baïonnette ou similaire à une des couronnes d'accouplement (5).

4. Accouplement de tuyaux selon une des revendications 1 à 3, **caractérisé en ce que** la coque d'accouplement (7) présente au moins un moyen de manipulation (20) raccordé, afin de provoquer son mouvement axial et le cas échéant rotatif.

5. Accouplement de tuyaux selon une des revendications 1 à 4, **caractérisé en ce que** les deux couronnes d'accouplement (5,6) sont respectivement raccordées bord à bord aux extrémités de tuyaux (3,4).

6. Accouplement de tuyaux selon une des revendications 1 à 5, **caractérisé en ce que** une des couronnes d'accouplement (5) reliée à la coque d'accouplement (7) dépasse radialement de l'autre couronne d'accouplement (6) englobée par la coque d'accouplement (7).
